# EUROPÄISCHE PATENTSCHRIFT

(11) **EP 2 748 510 B1**
(45) Veröffentlichungstag und Bekanntmachung des Hinweises auf die Patenterteilung: **30.11.2016**
(21) Anmeldenummer: 11749735.4
(22) Anmeldetag: 23.08.2011
(51) Int. Cl.: F16L 55/115, F16L 55/13

(54) **VERSCHLUSSELEMENT FÜR INNENDRUCKBEANSPRUCHTE BOHRUNGEN**
CLOSURE ELEMENT FOR BORES SUBJECTED TO INTERNAL PRESSURE
ÉLÉMENT DE FERMETURE D'ALÉSAGES SOUMIS À UNE PRESSION INTERNE

(43) Veröffentlichungstag der Anmeldung: 02.07.2014
(73) Patentinhaber: KVT-Koenig AG, 8953 Dietikon (CH)
(72) Erfinder: KRAUER, Jürg, CH-8610 Uster (CH); WÜST, Beat, CH-8048 Zürich (CH)
(74) Vertreter: Luchs, Willi
(86) Internationale Anmeldenummer: PCT/EP2011/004225
(87) Internationale Veröffentlichungsnummer: WO 2013/026458

(56) Entgegenhaltungen:
- EP-A1- 0 970 878
- WO-A1-2009/000317
- DE-A1- 3 902 500
- US-A- 3 279 643
- US-A- 3 380 610
- US-A1- 2004 151 533

## Beschreibung

Die Erfindung betrifft ein Verschlusselement für innendruckbeanspruchte Bohrungen nach dem Oberbegriff des Anspruchs 1.

Solche Verschlusselemente, welche auch als Expander bezeichnet werden, können beispielsweise zum dichten Verschliessen von Bohrungen in Motor- oder Ventilblöcken oder auch von Chemiebehältern eingesetzt werden. Im Innern eines Motor- oder Ventilblocks herrschen hohe Drücke bis zu 1'000 bar vor, weshalb an die Fertigungsqualität und die Materialeigenschaften des Verschlusselements zum dichten Verschliessen von Bohrungen in solchen Motor- oder Ventilblöcken hohe Anforderungen gestellt werden.

Ein Verschlusselement zum dichtenden Verschliessen von innendruckbeanspruchten Bohrungen ist aus der WO 2009/000317 A1 bekannt. Dieses Verschlusselement weist einen zum Einsetzen in die zu verschliessende Bohrung vorgesehenen zylindrischen Grundkörper mit einem nach aussen abstehenden Stützflansch auf. Im Innern des zylindrischen Grundkörpers ist ein Spreizkörper angeordnet, der einerseits einen Abschlussdeckel für die Bohrung bildet und andererseits den in die Bohrung eingesetzten Grundkörper in radialer Richtung gegen die Innenfläche der Bohrung presst. Im noch nicht eingebauten Zustand ist der Spreizkörper über eine Sollbruchstelle mit dem Grundkörper verbunden. Zum dichten Verschliessen der Bohrung wird zunächst der zylindrische Grundkörper mit dem daran über die Sollbruchstelle befestigten Spreizkörper in der Bohrung positioniert und anschliessend wird der Spreizkörper durch Druckanwendung unter Abscheren der Sollbruchstelle in den Grundkörper eingedrückt, so dass der Spreizkörper einen radialen Druck auf die Innenwand des Grundkörpers ausübt und diesen dadurch aufspreizt und gegen die Wand der zu verschliessenden Bohrung dichtend anpresst.

In der Druckschrift US-A-2004/0151533 ist ein einstückiger Verschlussdeckel erläutert, der aus Plastik hergestellt ist. Dieser Verschlussdeckel umfasst einen in einer Öffnung anliegenden vergleichbaren Grundkörper, einen inneren Schenkel und einen Übergangsbereich. Beim Verschliessen werden der Basiskörper und damit der innere Schenkel in die Bohrung hineingedrückt. Dadurch wird ausserhalb der Bohrung dieser Eckbereich des Schenkels gegen den eckigen Umfangsbereich des Kragens gedrückt, bis dieser Eckbereich unterhalb dieses eckigen Umfangsbereichs eingeschnappt ist.

Die Druckschrift DE-A-39 02 500 offenbart ebenfalls einen Verschlussdeckel aus Plastik. Bei diesem ist aussen eine ringförmige Dichtlippe und ein in eine Öffnung einsteckbarer Wandteil vorgesehen, die durch ein Verriegelungselement miteinander verbunden sind. Innen sind ein über einen Einlaufbereich mit dem Wandteil verbundener Boden und ein von diesem wegragendes Verriegelungselement angeordnet. Beim Verschliessen wird der Boden nach unten in die Öffnung hineingedrückt. Dabei bewirkt das Verriegelungselement wiederum ausserhalb der Öffnung einen radialen Druck auf das Verriegelungselement, bis das Verriegelungselement eingeschnappt ist.

Damit liegt beim Verschliessen dieser bekannten Verschlussdeckel durch dieses Einschnappen und damit einem Nachlassen des radialen Drucks ein unterschiedliches Funktionsprinzip vor, welche für eine druckbelastete Bohrung ungeeignet sind.

Hiervon ausgehend liegt der Erfindung die Aufgabe zugrunde, ein gattungsgemässes Verschlusselement so weiterzubilden, dass es noch höheren Innendrücken standhalten kann und sich einfach herstellen und in die zu verschliessende Bohrung einsetzen lässt.

Diese Aufgabe ist erfindungsgemäss mit einem Verschlusselement mit den Merkmalen des Anspruchs 1 sowie mit einem Verfahren zum Abdichten einer innendruckbeanspruchten Bohrung nach Anspruch 14 gelöst.

Bevorzugte Ausführungsformen des Verschlusselements und des Verfahrens sind den abhängigen Ansprüchen zu entnehmen.

Das erfindungsgemässe Verschlusselement zeichnet sich dadurch aus, dass der Spreizkörper sowohl vor dem Einsetzen des Verschlusselements in die Bohrung als auch im eingebauten Zustand einstückig am Grundkörper angeformt ist. Die Verbindung des Spreizkörpers mit dem Grundkörper ist dabei so ausgebildet, dass der Spreizkörper beim Einsetzen des Verschlusselements in die zu verschliessende Bohrung in den Grundkörper unter plastischer Verformung des Verbindungsbereichs zwischen Spreizkörper und Grundkörper eingedrückt werden kann, ohne dass sich die Verbindung zwischen dem Spreizkörper und dem Grundkörper löst. Abhängig von der Elastizität des verwendeten Werkstoffs kann das erfindungsgemässe Verschlusselement auch wieder aus der Bohrung herausgezogen und wieder verwendet werden.

Zweckmässigerweise ist der Spreizkörper topfförmig ausgebildet und umfasst einen Boden, der im eingesetzten Zustand des Verschlusselements einen Abschlussdeckel für die Bohrung bildet, sowie eine an dem Boden angeformte zylindrische Wandung. Der Grundkörper ist hülsenförmig ausgebildet mit einer zylindrischen Wandung, an der zweckmässig ein radial nach aussen vorstehender Stützflansch angeformt ist, über den sich das Verschlusselement an der die zu verschliessende Bohrung umgebenden Wandung abstützen kann.

Zum Verschliessen einer innendruckbeanspruchten Bohrung mit dem erfindungsgemässen Verschlusselement wird das Verschlusselement zunächst in die Bohrung eingesetzt und anschliessend durch Druckanwendung auf den Spreizkörper, welche manuell oder mittels eines Schlag- oder Presswerkzeugs ausgeübt werden kann, in die Bohrung eingepresst. Dabei wird der Spreizkörper unter plastischer Verformung insbesondere des Übergangsbereichs, an dem der Spreizkörper am Grundkörper angeformt ist und/oder eines Teilbereichs des Spreizkörpers, in den Grundkörper eingedrückt. In dieser Position presst der Spreizkörper den Grundkörper in radialer Richtung gegen die Innenfläche der Bohrung, wodurch das Verschlusselement dichtend in der Bohrung gehalten wird.

Beim Einpressen des Spreizelements in den Grundkörper wird die einstückige Verbindung zwischen dem Grundkörper und dem Spreizelement plastisch verformt, jedoch nicht gelöst, so dass das Spreizelement sowohl vor dem Einsetzen des Verschlusselements in die zu verschliessende Bohrung als auch nach dem Einsetzen einstückig an dem Grundkörper angeformt ist und bleibt.

Ausführungsbeispiele sowie weitere Vorteile der Erfindung sind nachfolgend anhand der Zeichnung näher erläutert. Es zeigen:
- Fig. 1: a) Schnitt eines ersten Ausführungsbeispiels eines erfindungsgemässen Verschlusselements in noch nicht eingebautem Zustand,
b) einen vergrösserten Ausschnitt des Übergangsbereichs, in dem der Spreizkörper an dem Grundelement angeformt ist,
c) zwei verschiedene perspektivische Darstellungen des Verschlusselements;
- Fig. 2: a) Längsschnitt des Verschlusselements nach Fig. 1 bei der Montage,
b) Längsschnitt des Verschlusselements im montierten Zustand;
- Fig. 3: a) Schnitt eines zweiten Ausführungsbeispiels eines erfindungsgemässen Verschlusselements in noch nicht eingebautem Zustand,
b) einen vergrösserten Ausschnitt des Übergangsbereichs, in dem der Spreizkörper an dem Grundelement angeformt ist,
c) zwei verschiedene perspektivische Darstellungen des Verschlusselements; und
- Fig. 4: a) Längsschnitt des Verschlusselements nach Fig. 3 bei der Montage,
b) Längsschnitt des Verschlusselements im montierten Zustand.

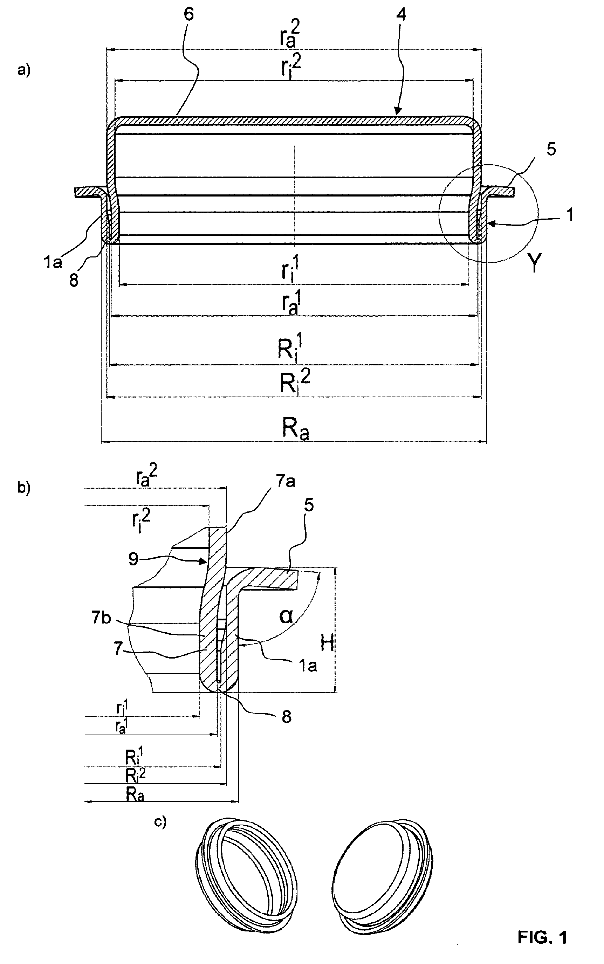

Das in Fig. 1 gezeigte erste Ausführungsbeispiel eines erfindungsgemässen Verschlusselements umfasst einen hülsenförmigen Grundkörper 1 mit einer Grundkörperwandung 1 a. Am oberen Ende des Grundkörpers 1 ist an dessen Wandung einstückig ein radial nach aussen vorstehender Stützflansch 5 angeformt. Wie aus der Detailansicht der Fig. 1b ersichtlich, kann der Stützflansch 5 leicht nach unten abgebogen sein, so dass der Winkel α zwischen der radial äusseren Umfangsfläche der Wandung 1a und der Unterseite bzw. der parallel dazu verlaufenden Oberseite des Stützflanschs 5 etwas weniger als 90°, nämlich beispielsweise α = 85°, beträgt.

Wie aus Fig. 1b ersichtlich ist, nimmt die Dicke der Wandung 1a des Grundkörpers 1 ausgehend von dem Stützflansch 5 nach unten hin stufenförmig zu. Diese Zunahme der Dicke der Wandung 1a des Grundkörpers 1 kann auch kontinuierlich (beispielsweise konisch) erfolgen. Durch die Zunahme der Dicke der Wandung 1a verringert sich der Innendurchmesser Rᵢ des Grundkörpers 1 von einem grösseren Wert Rᵢ² im oberen Bereich auf einen kleineren Wert Rᵢ¹ im unteren Bereich. Der Aussendurchmesser Rₐ des Grundkörpers bleibt dabei über die gesamte Höhe H im Wesentlichen konstant.

Das untere Ende der Wandung 1a des Grundkörpers 1 ist radial nach innen umgebogen und bildet im umgebogenen Bereich einen Übergangsbereich 8. In diesem Übergangsbereich 8 ist an der Wandung 1a des Grundkörpers 1 eine Wandung 7 einstückig angeformt. Der Übergangsbereich 8 ist dabei so ausgebildet, dass die angeformte Wandung 7 um 180° gegenüber der Wandung 1 a umgebogen ist und sich im Wesentlichen parallel zur Wandung 1 a verlaufend nach oben erstreckt. Die zylindrisch ausgebildete Wandung 7 ist Bestandteil eines Spreizkörpers 4, der neben der Wandung 7 einen daran einstückig angeformten Boden 6 umfasst. Der Spreizkörper 4 ist damit im Wesentlichen topfförmig ausgebildet, dies mit dem Boden 6 im oberen Bereich und der sich daran nach unten anschliessenden zylindrischen Wandung 7. Die Wandung 7 ist durch einen Übergang 9 in zwei Abschnitte unterteilt, nämlich einen oberen, aussenseitigen Abschnitt 7a und einen unteren, innenseitigen Abschnitt 7b. Die Dicke der Wandung 7 ist im aussenseitigen Abschnitt 7a und im innenseitigen Abschnitt 7b annähernd gleich gross. Der Innendurchmesser rᵢ¹ des innenseitigen Abschnitts 7b ist dabei kleiner als der Innendurchmesser rᵢ² des aussenseitigen Abschnitts 7a und entsprechend ist der Aussendurchmesser rₐ¹ des unteren, innenseitigen Abschnitts 7b kleiner als der Aussendurchmesser rₐ² des aussenseitigen Abschnitts 7a. Der Aussendurchmesser rₐ¹ des unteren, innenseitigen Abschnitts 7b des Spreizkörpers 4 ist dabei geringfügig kleiner als der Innendurchmesser Rᵢ¹ der Wandung 1a des Grundkörpers 1. Der untere, innenseitige Abschnitt 7b des Spreizkörpers 4 greift dadurch in den Grundkörper 1 ein. Der Aussendurchmesser rₐ² des oberen, aussenseitigen Abschnitts 7a des Spreizkörpers 4 ist geringfügig grösser ausgebildet als der grösste Innendurchmesser Rᵢ¹ der Wandung 1a des Grundkörpers 1.

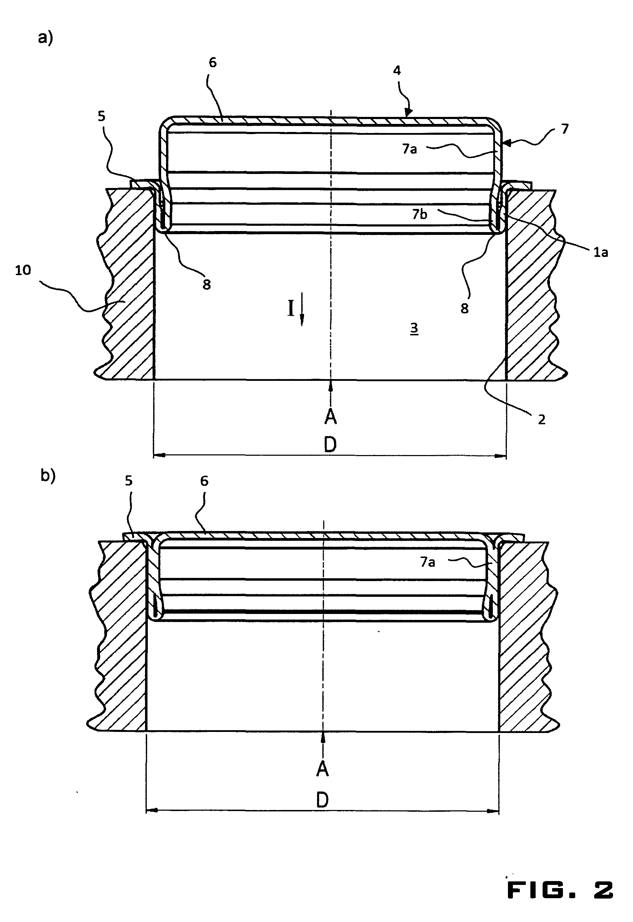

Zum Einsetzen des in Fig. 1 dargestellten Verschlusselements in eine zu verschliessende Bohrung 3 wird - wie in Fig. 2a gezeigt - das Verschlusselement zunächst (lose) in die Bohrung eingelegt, wobei sich der Stützflansch 5 an der die Bohrung umgebenden Wandung 10 abstützt. Der Aussenumfang (Aussendurchmesser Rₐ) des Grundkörpers 1 liegt dabei eng und bevorzugt spielfrei an der Innenfläche 2 der Bohrung 3 an. Der Aussendurchmesser Rₐ des Grundkörpers 1 ist vorteilhaft so gewählt, dass er geringfügig kleiner ist als der Durchmesser D der Bohrung 3. Bei einem Durchmesser der Bohrung 3 von beispielsweise D = 22 mm ist der Aussendurchmesser Rₐ des Grundkörpers 1 beispielsweise 21,9 mm.

Zum druckdichten Verpressen des Verschlusselements in der Bohrung 3 wird das Verschlusselement durch Eindrücken des Spreizkörpers 4 in den Grundkörper 1 in die in Fig. 2b gezeigte Stellung gebracht. Durch Krafteinwirkung auf den Boden 6 des Spreizkörpers 4 in Richtung I des Inneren der Bohrung 3 verformt sich zunächst der Übergangsbereich 8, in dem der untere, innenseitige Bereich 7b der Wandung 7 des Spreizkörpers 4 an der radial nach innen umgebogenen Wandung 1a des Grundkörpers 1 angeformt ist.

Im montierten Zustand der Verformung, der in Fig. 2b dargestellt ist, ist der Spreizkörper 4 vollständig in den Grundkörper 1 eingedrückt, so dass die Oberfläche des Bodens 6 bündig mit der Oberseite des Flansches 5 abschliesst. Der untere, innenseitige Abschnitt 7b der Wandung 7 wird dabei durch plastische Verformung verbogen und nach unten in Richtung I des Inneren der Bohrung 3 gedrückt. Durch das Eindrücken des Spreizkörpers 4 in den Grundkörper 1 kommt der obere, aussenseitige Abschnitt 7a des Spreizkörpers 4 in eingedrücktem Zustand (Fig. 2b) in Anlage an die Innenfläche (also den Innendurchmesser Rᵢ¹) des unteren Abschnitts der Wandung 1a des Grundkörpers 1, welcher den kleinsten Innendurchmesser Rᵢ des Grundkörpers 1 bildet. Weil der Aussendurchmesser rₐ² des oberen Abschnitts 7a des Spreizelements 4 grösser ist als der Innendurchmesser Rᵢ¹ des Grundkörpers 1 drückt das Spreizelement 4 in dieser Stellung die Wandung 1a des Grundkörpers 1 in radialer Richtung nach aussen gegen die Innenfläche 2 der Bohrung 3, wodurch das Verschlusselement fest und dichtend in der Bohrung 3 gehalten wird.

Beim Eindrücken des Spreizkörpers 4 in den Grundkörper 1 bleibt die Form des oberen, aussenseitigen Abschnitts 7a des Spreizkörpers stabil, wohingegen der untere, innenseitige Abschnitt 7b des Spreizkörpers sowie der Übergangsbereich 8, an dem die Wandung 7 des Spreizkörpers 4 an der Wandung 1a des Grundkörpers 1 befestigt ist, plastisch verformt wird. Die einstückige Verbindung des Spreizkörpers 4 an dem Grundkörper 1 wird dadurch jedoch nicht getrennt, wie dies bei dem Verschlusselement der WO 2009/000317 A1 der Fall ist.

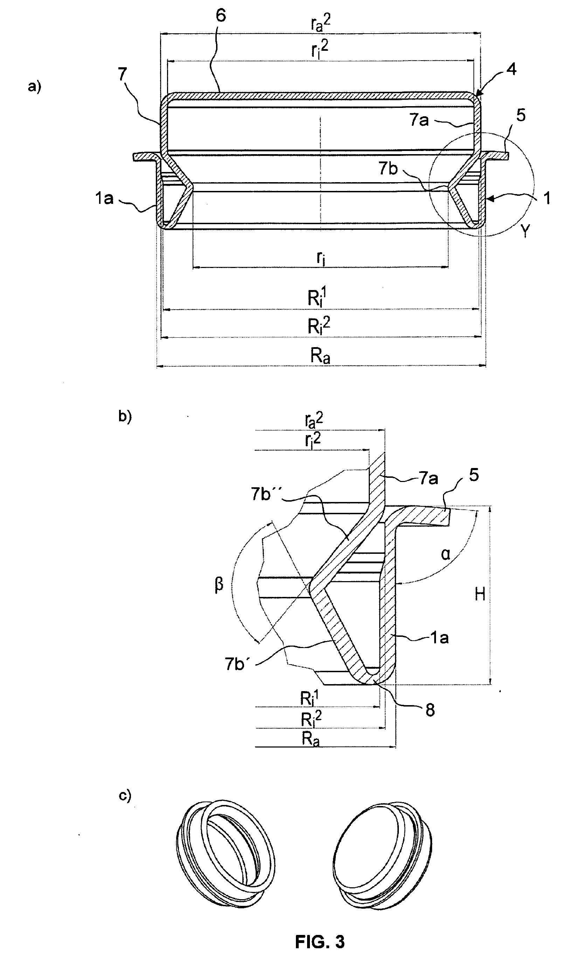

Das Verschlusselement des Ausführungsbeispiels von Fig. 3 unterscheidet sich von dem Verschlusselement nach Fig. 1 im wesentlichen nur durch die Ausbildung des Übergangsbereichs 8, in dem der Spreizkörper 4 an dem Grundkörper 1 angeformt ist. Ansonsten sind die gleichen Bezugszeichen verwendet.

Anders als bei dem Verschlusselement nach Fig. 1 ist der Übergangsbereich 8 bei diesem Ausführungsbeispiel im Querschnitt dreiecksförmig ausgebildet, wie insbesondere in Fig. 3b ersichtlich ist. Das untere Ende der Wandung 1a des Grundkörpers 1 ist stumpfwinklig und radial nach innen weisend zur Bildung des Übergangsbereichs 8 umgebogen. Allerdings ist in diesem Ausführungsbeispiel das untere Ende der Wandung 1 a nicht um 180° (wie in dem Ausführungsbeispiel von Fig. 1) umgebogen, sondern lediglich um einen stumpfen Winkel von weniger als 180°. Bei dem in Fig. 3 gezeigten Ausführungsbeispiel beträgt der Winkel, um den das untere Ende der Wandung 1 a radial nach innen umgebogen ist, ca. 115°. Andere Biegewinkel, die zwischen 90° und 180° liegen, sind hier möglich.

An den umgebogenen Übergangsbereich 8 schliesst sich einstückig an dem umgebogenen Ende der Wandung 1 a der untere, innenseitige Abschnitt 7b des Spreizkörpers 4 an. Dieser untere, innenseitige Abschnitt 7b des Spreizkörpers 4 ist - anders als beim Ausführungsbeispiel von Fig. 1 - bei dem in Fig. 3 gezeigten Ausführungsbeispiel abgewinkelt ausgebildet mit einem unteren Schenkel 7b' und einem oberen Schenkel 7b". Die beiden Schenkel 7b' und 7b" schliessen einen stumpfen Winkel β von ca. 115° ein. Am oberen Ende des oberen Schenkels 7b" schliesst sich dann der aussenseitige Abschnitt 7a des Spreizkörpers 4 an. Wie beim Ausführungsbeispiel von Fig. 1 ist das gesamte Verschlusselement mit seinem Spreizkörper 4 und dem Grundkörper 1 einstückig ausgebildet. Der Übergangsbereich 8, an dem der Spreizkörper 4 an dem Grundkörper 1 angeformt ist, sowie der untere, innenseitige Abschnitt 7b des Spreizkörpers 4 sind plastisch verformbar ausgebildet.

Wie bei dem Ausführungsbeispiel von Fig. 1 ist auch bei dem Ausführungsbeispiel der Fig. 3 der Aussendurchmesser rₐ² des oberen, aussenseitigen Abschnitts 7a des Spreizkörpers 4 (geringfügig) grösser als der Innendurchmesser Rᵢ¹ des Grundkörpers 1.

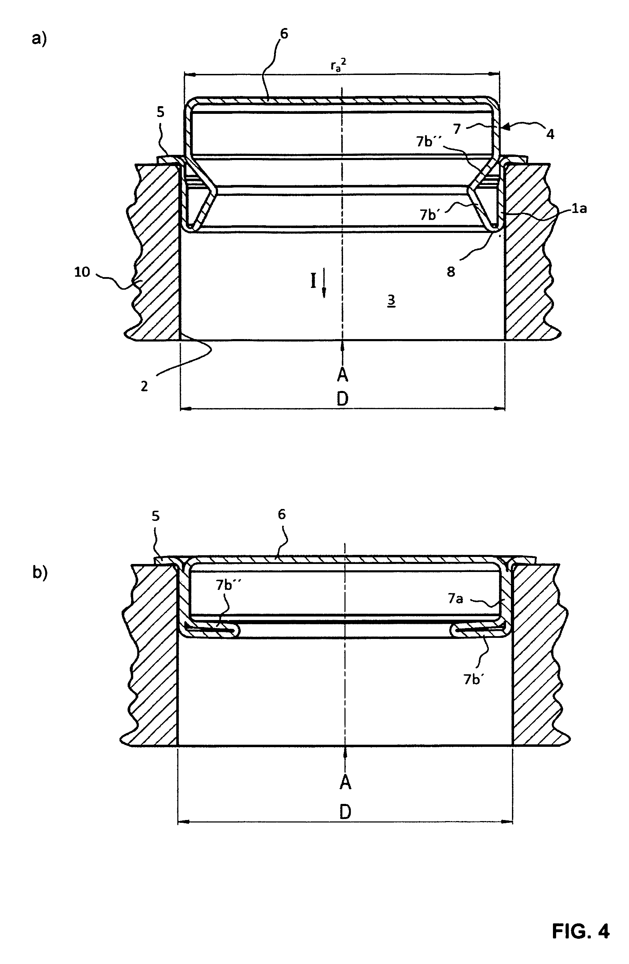

Das Verschlusselement von Fig. 3 wird wie das Verschlusselement von Fig. 1 in die Bohrung 3 eingepresst. Der Einpressvorgang ist in Fig. 4 in zwei Schritten dargestellt. Im ersten Schritt wird das Verschlusselement zunächst (lose) in die Bohrung 3 eingesetzt, wobei sich der Stützflansch 5 an der die Bohrung 3 umgebenden Wandung 10 abstützt. Im zweiten Schritt (Fig. 4b) wird dann der Spreizkörper 4 durch Druckanwendung in den Grundkörper 1 eingedrückt, bis die Oberseite des Bodens 6 bündig mit der Oberseite des Stützflansches 5 abschliesst. Beim Eindrücken des Spreizkörpers 4 in den Grundkörper 1 verformt sich der Übergangsbereich 8 sowie der winklig ausgebildete untere Abschnitt 7b (mit den Schenkeln 7b' und 7b") des Spreizkörpers 4. Gleichzeitig kommt der obere, aussenseitige Abschnitt 7a des Spreizkörpers 4 in Anlage an die Innenfläche der Wandung 1a des Grundkörpers 1. Aufgrund des grösseren Aussendurchmesser rₐ² des oberen aussenseitigen Abschnitts 7a des Spreizkörpers im Vergleich zum kleineren Innendurchmesser Rᵢ¹ der Wandung 1a des Grundkörpers übt der eingedrückte Spreizkörper 4 auf die Wandung 1a des Grundkörpers 1 eine radial nach aussen wirkende Presskraft auf und drückt so den Grundkörper 1 gegen die Innenfläche 2 der Bohrung dichtend an.

Beim Eindrücken des Spreizkörpers 4 in den Grundkörper 1 verformt sich insbesondere der winklige Verbindungsbereich zwischen dem unteren Schenkel 7b' und dem oberen Schenkel 7b" des unteren, innenseitigen Abschnitts 7b des Spreizkörpers 4 in die in Fig. 4b dargestellte Endstellung. In dieser Endstellung liegen die beiden Schenkel 7b' und 7b" des innenseitigen Abschnitts 7b um 180° umgebogen aufeinander, wie in Fig. 4b gezeigt. Der obere, aussenseitige Abschnitt 7a, der im wesentlichen parallel zur Längsachse A der Bohrung 3 verläuft, schliesst dann mit dem oberen Schenkel 7b" ungefähr einen rechten Winkel ein. Durch das Umbiegen der beiden Schenkel 7b' und 7b" des innenseitigen Abschnitts 7b des Spreizkörpers 4 wird die radiale Presskraft, die der Spreizkörper 4 auf den Grundkörper 1 a ausübt, noch verstärkt.

In beiden Ausführungsbeispielen der Erfindung können die Bestandteile des Verschlusselements einstückig aus Metall in einem Tiefziehverfahren oder als Spritzgussteil vorzugsweise aus Kunststoff hergestellt werden. Zweckmässig werden die erfindungsgemässen Verschlusselemente aus einem Metall, wie beispielsweise rostfreiem Stahl oder Aluminium, hergestellt und mit einer Beschichtung versehen. Bei einer Fertigung der Verschlusselemente aus Kunststoff ist eine Verstärkung mit Glasfasern möglich. Abhängig von der Elastizität des Materials des Verschlusselementes kann die Verformung auch elastisch und plastisch oder rein elastisch erfolgen. Die erfindungsgemässen Verschlusselemente können zum Verschliessen von druckbeanspruchten Bohrungen mit einem Durchmesser im Bereich von 15 mm bis 60 mm und einem Norm-Betriebsdruck zwischen 5 und 100 bar verwendet werden.

Die Erfindung ist mit den oben erläuterten Ausführungsbeispielen ausreichend dargetan. Es ist beispielsweise möglich, die zylindrische Wandung 1a des Grundkörpers 1 aussenseitig an beliebigen Stellen mit Aussparungen, Schlitzen oder Fenster zu versehen, um die Verankerung in der Bohrung zu verbessern. Hierzu kann ferner die Aussenfläche des Grundkörpers mit einer reibungserhöhenden Beschichtung oder mit Erhebungen, wie Zähnen, Rändelungen oder ähnlichem versehen werden.

Auch die Querschnittsform eines Verschlusselementes kann von der hier dargestellten Rundform abweichen. So sind beispielsweise auch quadratische oder rechteckige Querschnittsformen denkbar.

Im Prinzip könnte das Verschlusselement auch mehrteilig ausgebildet sein, indem beispielsweise der Boden 6 aus einem stabileren oder weniger hochwertigen Material bestehen könnte.

Des weiteren könnte das Verschlusselement im Prinzip auch mit einer oder mehreren siebartigen Öffnungen versehen sein, so dass eine Luft- bzw. Flüssigkeitsdurchlässigkeit gegeben ist, jedoch zum Beispiel feste Partikel zurückgehalten werden.

## Patentansprüche

1. Verschlusselement zum Verschliessen von innendruckbeanspruchten Bohrungen, vorzugsweise von Bohrungen in Motoren- bzw. Ventilblöcken oder Behältern, mit einem in die Bohrung (3) einsetzbaren hülsenförmigen Grundkörper (1), dessen Aussenumfang im eingebauten Zustand an der Innenfläche (2) der Bohrung (3) dichtend anliegt, wobei der Grundkörper (1) sowie ein mit diesem an seinem unteren Ende der Wandung (1a) durch einen umgebogenen Übergangsbereich (8) verbundener Spreizkörper (4) vorgesehen sind, **dadurch gekennzeichnet, dass** der Spreizkörper (4) eine zylindrisch ausgebildete Wandung (7) aufweist, die im unmontierten Zustand durch einen oberen aussenseitigen Abschnitt (7a) und einen unteren innenseitigen Abschnitt (7b) unterteilt ist, wobei aufgrund des grösseren Aussendurchmesser (rₐ²) des oberen aussenseitigen Abschnitts (7a) des Spreizkörpers im Vergleich zum kleineren Innendurchmesser (Rᵢ¹) der Wandung (1a) des Grundkörpers der Spreizkörper (4) im eingedrückten Zustand mit seinem oberen Abschnitt (7a) auf die Wandung (1a) des Grundkörpers (1) eine radial nach aussen wirkende Presskraft ausübt und so den Grundkörper gegen die Innenfläche der Bohrung dichtend andrückt.

2. Verschlusselement nach Anspruch 1, **dadurch gekennzeichnet, dass** der Grundkörper (1) und der Spreizkörper (4) einstückig ausgebildet sind.

3. Verschlusselement nach Anspruch 1 oder 2, **dadurch gekennzeichnet, dass** am Grundkörper (1) zusätzlich ein radial nach aussen vorstehender Stützflansch (5) angeformt ist.

4. Verschlusselement nach einem der Ansprüche 1 bis 3, **dadurch gekennzeichnet, dass** die Dicke der Wandung (1 a) des Grundkörpers (1) ausgehend von dem Stützflansch (5) in Richtung des Inneren (I) der Bohrung (3) kontinuierlich oder stufenförmig zunimmt.

5. Verschlusselement nach einem der Ansprüche 1 bis 4, **dadurch gekennzeichnet, dass** der Spreizkörper (4) topfförmig ausgebildet ist mit einem Boden (6) und einer daran angeformten Wandung (7).

6. Verschlusselement nach einem der Ansprüche 1 bis 5, **dadurch gekennzeichnet, dass** der Spreizkörper (4) in eingebautem Zustand in den Grundkörper (1) eingreift.

7. Verschlusselement nach Anspruch 5 oder 6, **dadurch gekennzeichnet, dass** die Wandung (7) des Spreizkörpers (4) einstückig am hülsenförmigen Grundkörper (1) angeformt ist, wobei der Übergangsbereich (8) verformbar ausgebildet ist.

8. Verschlusselement nach Anspruch 7, **dadurch gekennzeichnet, dass** das im eingebauten Zustand ins Innere (I) der Bohrung (3) weisende Ende (1 a) des hülsenförmigen Grundkörpers (1) stumpfwinklig umgebogen ist und dass die Wandung (7) des Spreizkörpers (4) einstückig am umgebogenen Ende (1a) angeformt ist.

9. Verschlusselement nach einem der Ansprüche 6 bis 8, **dadurch gekennzeichnet, dass** im nicht eingebauten Zustand in der Wandung (7) des Spreizkörpers (4) ein Übergang (9) ausgeformt ist, der die Wandung (7) in einen aussenseitigen Abschnitt (7a) und einen innenseitigen Abschnitt (7b) unterteilt, wobei der Aussendurchmesser (rₐ²) des aussenseitigen Abschnitts (7a) grösser ist als der Aussendurchmesser (rₐ1) des innenseitige Abschnitts (7b).

10. Verschlusselement nach Anspruch 9, **dadurch gekennzeichnet, dass** der Aussendurchmesser (rₐ²) des aussenseitigen Abschnitts (7a) grösser, insbesondere geringfügig grösser ist als der Innendurchmesser (Rᵢ¹) des hülsenförmigen Grundkörpers (1).

11. Verschlusselement nach Anspruch 9 oder 10, **dadurch gekennzeichnet, dass** im nicht eingebauten Zustand nur der innenseitige Abschnitt (7b) des Spreizkörpers (4) in den Grundkörper (1) eingreift.

12. Verschlusselement nach einem der Ansprüche 1 bis 11, **dadurch gekennzeichnet, dass** beliebige Partien des Elements mit Aussparungen, Schlitzen, Fenstern oder dergleichen versehen ist.

13. Verschlusselement nach einem der Ansprüche 1 bis 12, **dadurch gekennzeichnet, dass** die Aussenfläche des Grundkörpers (1) zumindest teilweise mit einer reibungserhöhenden Beschichtung und/oder mit Erhebungen, wie Zähnen, Rändelungen oder ähnlichem, versehen ist.

14. Verfahren zum Abdichten einer innendruckbeanspruchten Bohrung (3) mit einem Verschlusselement nach einem der Ansprüche 1 bis 13, **dadurch gekennzeichnet, dass** das Verschlusselement zunächst in die Bohrung (3) eingesetzt und anschliessend durch Druckanwendung auf den Spreizkörper (4) darin eingepresst wird, wobei der Spreizkörper (4) beim Einpressen des Verschlusselements in die Bohrung (3) durch Verformung in den Grundkörper (1) eingedrückt wird, um den Grundkörper (1) in radialer Richtung gegen die Innenfläche (2) der Bohrung (3) zu drücken.

15. Verfahren nach Anspruch 14, **dadurch gekennzeichnet, dass** beim Eindrücken des Verschlusselements in die Bohrung (3) der innenseitige Abschnitt (7b) des Spreizkörpers (4) durch Verformung axial in Richtung des Inneren (I) der Bohrung (3) und/oder radial in Richtung der Längsachse (A) der Bohrung (3) gedrückt wird.

## Claims

1. Closure element for closing off bores subjected to internal pressure, preferably bores in engine respective valve blocks or containers, comprising a sleeve-shaped main body (1) which can be inserted into the bore (3) and the outer circumference of which, in the installed state, rests against the inner surface (2) of the bore (3), forming a seal, whereby the main body (1) and an expanding body (4) connected to the latter at its lower end of the wall (1a) by a bent transition region (8) are provided, **characterised in that** the expanding body (4) having a cylindrical shaped wall (7), which in the uninstalled state is sub-divided into an upper outside portion (7a) and a lower inside portion (7b), whereby due to the larger outside diameter (rₐ²) of the upper outside portion (7a) of the expanding body in comparison to the smaller inside diameter (Rᵢ¹) of the wall (1a) of the main body the expanding body (4) in the pressed in state exerts a radially outwardly effective pressing force upon the wall (1 a) of the main body (1) and so presses the main body against the inner surface of the bore forming a seal.

2. Closure element element according to Claim 1, **characterised in that** the main body (1) and the expanding body (4) are made in one piece.

3. Closure element according to Claim 1 or 2, **characterised in that** a radially outwardly projecting supporting flange (5) is additionally moulded onto the main body (1).

4. Closure element according to any of the Claims 1 to 3, **characterised in that** the thickness of the wall (1a) of the main body (1) increases continuously or in steps from the supporting flange (5) towards the inside (I) of the bore (3).

5. Closure element according to any of the Claims 1 to 4, **characterised in that** the expanding body (4) is made in a cup shape and comprises a base (6) and a wall (7) moulded onto the latter.

6. Closure element according to any of the Claims 1 to 5, **characterised in that** in the installed state the expanding body (4) reaches into the main body (1).

7. Closure element according to Claim 5 or 6, **characterised in that** the wall (7) of the expanding body (4) is moulded in one piece onto the sleeve-shaped main body (1), whereby the transition region (8) being made deformably.

8. Closure element according to Claim 7, **characterised in that** in the installed state, the end (1a) of the sleeve-shaped main body (1) pointing into the inside (I) of the bore (3) is bent at an obtuse angle and that the wall (7) of the expanding body (4) is moulded onto the bent end (1 a) in one piece.

9. Closure element according to any of the Claims 6 to 8, **characterised in that** in the uninstalled state a transition (9) is formed in the wall (7) of the expanding body (4), which transition sub-divides the wall (7) into an outside portion (7a) and an inside portion (7b), the outside diameter (rₐ²) of the outside portion (7a) being larger than the outside diameter (rₐ¹) of the inside portion (7b).

10. Closure element according to Claim 9, **characterised in that** the outside diameter (rₐ²) of the outside portion (7a) is larger, in particular slightly larger, than the inside diameter (Rᵢ¹) of the sleeve-shaped main body (1).

11. Closure element according to Claim 9 or 10, **characterised in that** in the uninstalled state, only the inside portion (7b) of the expanding body (4) reaches into the main body (1).

12. Closure element according to any of the Claims 1 to 11, **characterised in that** any parts of the element are provided with cut-outs, slots, windows or the like.

13. Closure element according to any of the Claims 1 to 12, **characterised in that** the outer surface of the main body (1) is provided at least partially with a friction-increasing coating and/or with elevations such as teeth, knurls or similar.

14. Method for sealing a bore (3) subjected to internal pressure comprising a closure element according to any of the Claims 1 to 13, **characterised in that** the closure element is first of all inserted into the bore (3) and is then pressed into the latter by applying pressure to the expanding body (4), upon pressing the closure element into the bore (3) the expanding body (4) being pressed into the main body (1) by deforming in order to press the main body (1) in the radial direction towards the inner surface (2) of the bore (3).

15. The method according to Claim 14, **characterised in that** upon pressing the closure element into the bore (3) the inside portion (7b) of the expanding body (4) is pressed by deformation axially towards the inside (I) of the bore (3) and/or radially towards the longitudinal axis (A) of the bore (3).

## Revendications

1. Elément de fermeture pour fermer des alésages soumis à une pression interne, de préférence d'alésages de blocs moteurs ou de blocs soupapes ou de réservoirs, ayant un corps (1) de base en forme de manchon, qui peut être inséré dans l'alésage (3) et dont le pourtour extérieur s'applique, à l'état monté, avec étanchéité à la surface intérieure de l'alésage (3), dans lequel est prévu le corps (1) de base, ainsi que, relié à celui-ci à son extrémité inférieure de la paroi (1a) par une partie (8) de transition coudée, un corps (4) d'écartement, **caractérisé en ce que** le corps (4) d'écartement a une paroi (7) qui est constituée de manière cylindrique et qui, à l'état non monté, est subdivisée en une partie (7a) supérieure du côté extérieur et en une partie (7b) inférieure du côté intérieur, dans lequel, en raison du diamètre (rₐ²) extérieur plus grand de la partie (7a) supérieure du côté extérieur du corps d'écartement par rapport au diamètre (R_{I}¹) intérieur plus petit de la paroi (1a) du corps de base, le corps (4) d'écartement applique à l'état comprimé, par sa partie (7a) supérieure, sur la paroi (1a) du corps (1) de base, une force de pression agissant radialement vers l'extérieur et applique ainsi le corps de base avec étanchéité sur la surface intérieure de l'alésage.

2. Elément de fermeture suivant la revendication 1,
**caractérisé en ce que** le corps (1) de base et le corps (4) d'écartement sont constitués d'une seule pièce.

3. Elément de fermeture suivant les revendications 1 ou 2,
**caractérisé en ce qu'**il est formé en outre sur le corps (1) de base une bride (5) d'appui en saillie radialement vers l'extérieur.

4. Elément de fermeture suivant l'une des revendications 1 à 3,
**caractérisé en ce que** l'épaisseur de la paroi (1a) du corps (1) de base augmente continuellement ou par paliers à partir de la bride (5) d'appui en direction de l'intérieur de l'alésage (3).

5. Elément de fermeture suivant l'une des revendications 1 à 4,
**caractérisé en ce que** le corps (4) d'écartement est constitué sous la forme d'un pot en ayant un fond et une paroi (7) qui y est formée.

6. Elément de fermeture suivant l'une des revendications 1 à 5
**caractérisé en ce que** le corps (4) d'écartement pénètre à l'état monté dans le corps (1) de base.

7. Elément de fermeture suivant les revendications 5 ou 6,
**caractérisé en ce que** la paroi (7) du corps (4) d'écartement est formée d'une seule pièce sur le corps (1) de base en forme de manchon, la partie (8) de transition étant constituée de manière déformable.

8. Elément de fermeture suivant la revendication 7,
**caractérisé en ce que** l'extrémité (1a), tournée à l'état monté vers l'intérieur (1) de l'alésage (3), du corps (1) de base en forme de manchon est coudée suivant un angle obtus et **en ce que** la paroi (7) du corps (4) d'écartement est formée d'une seule pièce à l'extrémité (1a) coudée.

9. Elément de fermeture suivant l'une des revendications 6 à 8,
**caractérisé en ce qu'**à l'état non monté est formée, dans la paroi (7) du corps (4) d'écartement, une transition (9) qui subdivise la paroi (7) en une partie (7a) du côté extérieur et en une partie (7b) du côté intérieur, le diamètre (rₐ²) extérieur de la partie (7a) du côté extérieur étant plus grand que le diamètre (rₐ¹) extérieur de la partie (7b) du côté intérieur.

10. Elément de fermeture suivant la revendication 9,
**caractérisé en ce que** le diamètre (rₐ²) extérieur de la partie (7a) du côté extérieur est plus grand, notamment légèrement plus grand, que le diamètre (R_{I}¹) intérieur du corps (1) de base en forme de manchon.

11. Elément de fermeture suivant les revendications 9 ou 10,
**caractérisé en ce qu'**à l'état non monté, seule la partie (7b) du côté intérieur du corps (4) d'écartement pénètre dans le corps (1) de base.

12. Elément de fermeture suivant l'une des revendications 1 à 11,
**caractérisé en ce qu'**une partie quelconque de l'élément est pourvue d'évidements, de fentes, de fenêtres ou analogues.

13. Elément de fermeture suivant l'une des revendication 1 à 12,
**caractérisé en ce que** la surface extérieure du corps 1 de base est pourvue au moins en partie d'un revêtement augmentant le frottement et/ou de surélévations, comme des dents, des moletages ou analogues.

14. Procédé pour rendre étanche un alésage (3) soumis à une pression interne par un élément de fermeture suivant l'une des revendications 1 à 13,
**caractérisé en ce que** l'on introduit d'abord l'élément de fermeture dans l'alésage (3) et on l'y enfonce ensuite, par application d'une pression au corps (4) d'écartement, le corps (4) d'écartement étant, lorsque l'élément de fermeture est enfoncé dans l'alésage (3), enfoncé par déformation dans le corps (1) de base pour pousser le corps (1) de base dans la direction radiale sur la surface (2) intérieure de l'alésage (3).

15. Procédé suivant la revendication 14,
**caractérisé en ce que**, lorsque l'élément de fermeture est enfoncé dans l'alésage (3), la partie (7b) du côté intérieur du corps (4) d'écartement est poussée par déformation axialement en direction de l'intérieur (I) de l'alésage (3) et/ou radialement en direction de l'axe (A) longitudinal de l'alésage (3).
